Europäisches Patentamt

(19) European Patent Office

Office européen des brevets

(11) Publication number: **0 024 103**
**A1**

# EUROPEAN PATENT APPLICATION

(21) Application number: **80302151.8**

(22) Date of filing: **26.06.80**

(51) Int. Cl.³: **F 16 L 27/12**
**B 05 B 15/00**

(30) Priority: **27.06.79 GB 7922290**

(43) Date of publication of application:
**25.02.81 Bulletin 81/8**

(84) Designated Contracting States:
**CH DE FR GB IT LI NL SE**

(71) Applicant: **HILLS INDUSTRIES LIMITED**
**Pontygwindy Industrial Estate**
**Caerphilly Mid-Glamorgan, Wales(GB)**

(72) Inventor: **Juggins, Maurice**
**39 Greenhill**
**Bromsgrove Worcestershire(GB)**

(74) Representative: **Burrows, Anthony Gregory et al,**
**Haseltine Lake & Co. Hazlitt House 28 Southampton**
**Buildings Chancery Lane**
**London, WC2 1AT(GB)**

(54) **Tubular telescopic device and apparatus with which it is used.**

(57) A spraying lance includes telescopic tubes (1) and (4). The inner end of the inner tube (1) supports a sliding seal (3) consisting of a tubular sealing member (8) of which a tubular portion (10) fits co-axially in the tube (1) and a tubular portion (11) seals a gap (50) between the tubes (1, 4), and a retaining pin (9) which compresses the portion (10) between itself and the tube (1). The outer end of the tube (4) has turnably threaded thereon a tightening sleeve (17) providing internally an oblique camming surface (22) which, as the sleeve (17) is tightened, cams a split collar (20) inwards to cause it to grasp firmly the tube (1). A handle (7) of the lance has an internal flange (33) whereby it clamps a flexible hose (31) against a nipple (29) of a liquid flow control valve (6).

EP 0 024 103 A1

./...

TITLE MODIFIED
see front page

-1-

"IMPROVEMENTS IN OR RELATING TO TUBULAR APPARATUS."

This invention relates to tubular apparatus.

It is known from French Patent 1239713 to provide a sliding seal between inner and outer tubes of a telescopic device of an atomiser, the seal being carried by the inner tube and sliding on the inside surface of the outer tube. The seal comprises a bush and an elastomeric sealing ring mounted in a peripheral groove formed in a section of the bush of larger external diameter. The bush is co-axial with the tubes and includes a section of smaller external diameter fastened in an end of the inner tube by means of a cross-pin. The section of larger external diameter is situated outside the inner tube but inside the outer tube. The bush is formed with a co-axial bore through which liquid can flow into the inner tube, a ball and an annular seat in the bore providing a non-return valve to prevent liquid flow in the opposite sense. However, the manufacture of the bush and its fastening involve a considerable amount of machining and are therefore relatively expensive.

United States Patent 2776168 discloses an extension and telescoping attachment for a shower, including an inner tube which is adjustable to a desired longitudinal position relative to an outer tube. It would appear that friction between an adjustable packing gland and the inner tube retains the inner tube in that adjusted position. However, it would seem that the inner tube is not held firmly in that position, because the user can extend and retract the attachment at will.

Federal German Offenlegungsschrift 2203511 describes a spraying apparatus in which a rigid spraying lance is attached to a flexible hose which supplies liquid to the lance. The lance includes a hollow elastomeric handle which can be grasped by the user and through which the liquid flows. At its upstream end the handle includes a tubular stub which is formed externally with a length of screwthreading and, spaced upstream from the screwthreading, a collar, so that there is an annular groove between the screwthreading and the collar. The downstream end of the flexible hose is pushed co-axially along the stub over the collar, and then an elastomeric nut is tightened onto the screwthreading to clamp the hose between itself and the collar. However, the user would need to employ a tool such as a spanner to tighten the nut sufficiently to ensure that the hose is firmly held on the lance.

According to one aspect of the present invention, there is provided a telescopic device, comprising inner and outer tubes slidable longitudinally one in the other, and a sliding seal arranged to seal an annular gap between the tubes, the seal having extending therethrough from one axial end region to the other axial end region a fluid flow duct, characterised in that the seal comprises a flexible tubular sealing member including a portion received in the inner tube and a tubular portion outside the inner tube and sealing the gap, and a retaining member inserted in the sealing member and pressing the portion radially against the inner tube to retain the seal therein.

This sliding seal has the advantage of being simple and inexpensive to manufacture, to mount and to replace.

According to another aspect of the present invention, there is provided a telescopic device, comprising first and second tubes slidable longitudinally one in the other, a flexible clamping member, and a tightening member movable axially relative to the first tube to tighten the clamping member against the second tube to restrain the tubes from longitudinal sliding movement relatively to each other, characterised in that a surface obliquely inclined to the axis of the tubes acts as a camming surface to convert axial movement of the tightening member relative to the first tube into radially inward movement of the clamping member to tighten the collar against the second tube.

This telescopic device has the advantage that the inward camming of the clamping member causes it to hold the second tube firmly and reliably against longitudinal movement relative to the first tube.

According to a further aspect of the present invention, there is provided a tubular apparatus, comprising a tubular duct for receiving co-axially over one end thereof a flexible pipe, and a tubular clamping member arranged to be releasably connected over said one end and at the same time to clamp the pipe to said one end, characterised in that said tubular clamping member is a handle.

The advantage of making this clamping member in the form of a handle is that the user can obtain a sufficiently good purchase thereon as to be able to clamp the pipe to the tubular duct without needing to use a tool.

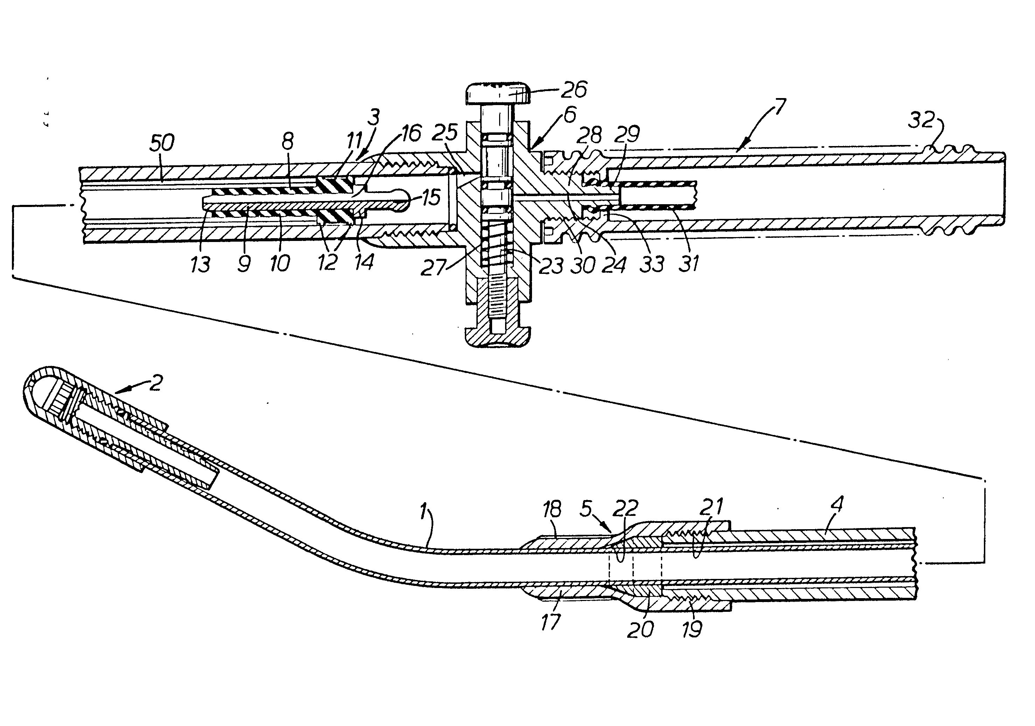

In order that the invention may be clearly understood, and readily carried into effect, reference will now be made, by way of example, to the accompanying drawing, which shows an axial sectional view through a telescopic spraying lance, particularly for horticultural use.

Referring to the drawing, the lance includes an inner metal tube 1 having fixedly mounted in the front end thereof a spraying nozzle 2 and having fixedly mounted in the rear end thereof a sliding seal 3. The lance also includes a metal outer tube 4 having turnably mounted on the front end thereof a metal clamping bush 5 and having fixedly mounted on the rear end thereof a flow control valve 6. On the rear end of the valve 6 is removably mounted a handle 7. The seal 3 consists of a tubular sealing member 8 of elastomeric material and a retaining member in the form of a metal pin 9. The member 8 includes a tubular portion 10 which is closely received in the rear end of the inner tube 1 and a tubular portion 11 with annular sealing flanges 12 and serving to seal the annular gap 50 between the tubes 1 and 4. The pin 9 includes a shank 13 which is a push-fit through the hollow interior of the member 8, a flange 14 limiting the extent of insertion of the pin 9 into the member 8, and a head 15 for abutting the valve 6 to limit the depth of movement of the tube 4. For the whole length of the pin 9, a sector thereof is cut away to form a spraying liquid duct 16 through the seal 3. The push-fitting of the pin 9 into the sealing member 8 presses the portion 10 tightly against the encircling rear end of the tube 1. This construction of sliding seal has the advantages of being simple to assemble, of remaining reliably fixed to the tube 1, and of allowing very easy replacement of the sealing member 8.

The clamping bush 5 consists of a tubular portion 17 which is externally knurled at 18 for ease of turning of the bush and through which the tube 1 can slide easily axially, and a tubular portion 19 of larger internal and external diameters. The portion 19 includes an internal annular wall which is formed with internal screwthreading 21 and which is connected by an internal frusto-conical transition wall 22 to the internal wall of the portion 17. The tube 4 is formed at its front end with external screwthreading co-operating with the internal screwthreading 21. Between the front end of the tube 4 and the wall 22 is arranged round the tube 4 a resilient split collar 20 formed at its front end with an external frusto-conical wall arranged to slide axially on the wall 22. With the bush 5 in a tightened condition on the tube 4, the collar 20 bears firmly against the tube 1 and thus retains the tube 1 against movement relative to the tube 4, even when the axial force of the spraying liquid on the tube 1 during use is at its highest. In an untightened condition of the bush 5, the collar 20 does not bear firmly against the tube 1, and thus the tube 1 is freely slidable axially through the bush 5. The valve 6 includes a slide valve member 23 which, in the position shown in the drawing, prevents spraying liquid from flowing from a spraying liquid inlet channel 24 to a spraying liquid outlet channel 25 leading to the interior of the tube 4. However, by depression of a button 26 of the member 23 against the action of a return spring 27, the member 23 can be brought to an open position in which the channel 24 communicates with the channel 25. The rear end 28 of the valve 6 is of a tubular form co-axial with the lance and with the channel 24, and terminates rearwardly in a co-axial nipple 29. Forwardly of the nipple 29 the end 28 is formed with external screwthreading 30. The end 28 can receive over its nipple 29 a flexible hose 31 for supplying spraying liquid from a container (not shown) under pressure. The handle 7 is of tubular form, its external surface 32 being ribbed for reliable gripping by the hand. At its front end, the handle 7 is formed with internal screwthreading co-operating with the screwthreading 30. Just rearwardly of its internal screwthreading, it is formed with an inwardly directed flange 33 which, on screwing of the handle 7 onto the valve 6, clamps the hose 31 tightly against the nipple 29, and thus prevents the hose 31 from being forced off the nipple 29 by the spraying liquid pressure.

CLAIMS

1.      A telescopic device, comprising inner and outer tubes (1,4) slidable longitudinally one in the other, and a sliding seal (8,9) arranged to seal an annular gap (50) between the tubes (1,4), the seal (8,9) having extending therethrough from one axial end region to the other axial end region a fluid flow duct (16), characterised in that the seal (8,9) comprises a flexible tubular sealing member (8) including a portion (10) received in the inner tube (1) and a tubular portion (11) outside the inner tube (1) and sealing the gap (50), and a retaining member (9) inserted in the sealing member (8) and pressing the portion (10) radially against the inner tube (1) to retain the seal (8,9) therein.

2.   A device according to claim 1, characterised in that the retaining member(9) is in the form of a head pin of which the head (15) is disposed outside the sealing member (8) and the inner tube (1).

3.      A device according to claim 2, characterised in that the pin (9) is formed inwardly of its head with a flange (14) abutting against the tubular portion (11).

4.      A device according to any preceding claim, characterised in that the retaining member is formed with a channel therealong providing the duct (16), and this channel extends completely through the sealing member (8).

5.      A telescopic device, comprising first and second tubes (1,4) slidable longitudinally one in the other, a flexible clamping member (20),and a tightening member (17) movable axially relative to the first tube (4) to tighten the clamping member (20) against the second tube (1) to restrain the tubes (1,4) from longitudinal sliding movement relatively to each other, characterised in that a surface (22) obliquely inclined to the axes of the tubes (1,4) acts as a camming surface to convert axial movement of the tightening member (17) relative to the first tube (4) into radially inward movement of the clamping member (20) to tighten the member (20) against the second tube (1).

6.        A device according to claim 5, characterised in that said clamping member (20) is a split collar around the second tube (4).

7.        A device according to claim 5 or 6, wherein the tightening member (17) is axially adjustably mounted on the first tube (4), and the clamping member (20) is housed between the tightening member (17) and an end of the first tube (4).

8.        A tubular apparatus, comprising a tubular duct (28) for receiving co-axially over one end thereof a flexible pipe (31), and a tubular clamping member (7) arranged to be releasably connected over said one end and at the same time to clamp the pipe (31) to said one end, characterised in that said tubular clamping member (7) is a handle (7).

9.        An apparatus according to claim 8, wherein said one end is formed as a nipple (29), and said handle (7) is formed internally with an inwardly directed flange (33) for clamping said pipe (31) against said nipple (29).

1/1

| Category | Citation of document with indication, where appropriate, of relevant passages | Relevant to claim |
|---|---|---|
| | DE - A1 - 2 446 950 (TADA) <br> * fig. 1 * | 1 |
| | US - A - 3 343 796 (W.J. TRICKEY) <br> * fig. 1 * | 1 |
| | US - A - 2 031 754 (J.M. BACIGALUPI) <br> * fig. 1, 4 * | 1 |
| | US - A - 3 154 632 (F.L. BROWNE) <br> * fig. 2, 3, 4 * | 5,6,7 |
| | DE - A - 2 152 083 (HYDROTECH SERVICES) <br> * claim 6; fig. 1, 2 * | 5,6 |
| | GB - A - 1 241 167 (A.E. ARTHUR LTD.) <br> * fig. 1, 2, 3 * | 5,6 |
| A | GB - A - 765 218 (FOUR OAKS SPRAYING MACHINE) <br> * complete document * | |
| A | DE - C - 928 615 (BAYERISCHE MOTOREN WERKE) <br> * complete document * | |
| A | US - A - 2 461 828 (G.F. LOMELINO) <br> * complete document * <br> ./.. | |

**DOCUMENTS CONSIDERED TO BE RELEVANT**

**CLASSIFICATION OF THE APPLICATION (Int. Cl.3)**

F 16 L 27/12
B 05 B 15/00

**TECHNICAL FIELDS SEARCHED (Int.Cl.3)**

B 05 B 15/00
F 16 L 27/00
F 16 L 51/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons
&: member of the same patent family, corresponding document

The present search report has been drawn up for all claims

| Place of search | Date of completion of the search | Examiner |
|---|---|---|
| Berlin | 04-09-1980 | SCHLABBACH |

EPO Form 1503.1  06.78

European Patent
Office

**EUROPEAN SEARCH REPORT**

Application number

EP 80 30 2151.8

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| A | US - A - 1 868 014 (J.W. LUCAS) <br> * complete document * <br> ---- | | |
| | | | **TECHNICAL FIELDS SEARCHED (Int. Cl.³)** |

EPO Form 1503.2  08.78